# EUROPEAN PATENT APPLICATION

(11) **EP 2 942 734 A1**
(43) Date of publication of application: **11.11.2015**
(21) Application number: 15165704.6
(22) Date of filing: 29.04.2015
(51) Int. Cl.: G06K 1/12, G06F 12/00, G06Q 20/00, G07F 7/10

(54) **DATA PROCESSING APPARATUS FOR IC CARD ISSUING, IC CARD ISSUING APPARATUS, IC CARD ISSUING SYSTEM, DATA PROCESSING PROGRAM FOR IC CARD ISSUING, IC CARD ISSUING PROGRAM**

(30) Priority: 08.05.2014 JP 2014097236
(71) Applicant: Kabushiki Kaisha Toshiba, Minato-ku Tokyo 105-8001 (JP)
(72) Inventor: Fukuoka, Hiroki, Tokyo (JP)
(74) Representative: Horn Kleimann Waitzhofer Patentanwälte PartG mbB

(57) **Abstract**

An embodiment provides a data processing apparatus for IC card issuing of an IC card issuing system (1) , the system including the data processing apparatus (200) for the IC card issuing and an IC card issuing apparatus (400) that issues an IC card (500), including: a data processor for issuing that generates issuing data to be used to issue the IC card in the IC card issuing apparatus by adding an identifier to an input data, and the identifier indicating processing to be executed in the IC card issuing apparatus.

## Description

### CROSS-REFERENCE TO RELATED APPLICATIONS

This application is based upon and claims the benefit of priority from the prior Japanese Patent Application No. 2014-097236, filed on May 8, 2014, the entire contents of which are incorporated herein by reference.

### FIELD

Embodiments described herein relate generally to a data processing apparatus for IC card issuing, an IC card issuing apparatus, an IC card issuing system, a data processing program for IC card issuing, and an IC card issuing program.

### BACKGROUND

In general, an IC card, which is used as a portable electronic apparatus, includes a card-shaped main body formed of plastics or the like and an IC module which is embedded in the main body. The IC module includes an IC chip. The IC chip includes a nonvolatile memory, which can retain data even in a power-off state, and a CPU which executes various arithmetic operations.

Common data according to the specification of an IC card and individual data different for each IC card are converted by an issuing data generation application, and thus issuing data for IC card issuing is generated. An IC card issuing apparatus for issuing the IC card analyzes the issuing data and writes the issuing data in an IC chip by execution of an IC card issuing program. Thus, the IC card is issued.

However, the IC card issuing program needs to be generated according to the specification of the IC card. For this reason, when the specification of the IC card is changed, a new IC card issuing program is required. However, there is a problem that the IC card issuing program is not easily changed because of being associated with an issuing apparatus of the IC card.

### BRIEF DESCRIPTION OF THE DRAWINGS

Fig. 1 is a diagram for describing a configuration example of an IC card issuing system according to an embodiment.
Fig. 2 is a diagram for describing an example of a data processing apparatus for IC card issuing according to an embodiment.
Fig. 3 is a diagram for describing an example of an IC card issuing apparatus according to an embodiment.
Fig. 4 is a diagram for describing an example of an IC card according to an embodiment.
Fig. 5 is a diagram for describing an example of generating issuing data according to an embodiment.
Fig. 6 is a diagram for describing an example of an issuing data according to an embodiment.

### DETAILED DESCRIPTION

An embodiment of the invention provides a data processing apparatus for IC card issuing of an IC card issuing system, the system including the data processing apparatus for the IC card issuing and an IC card issuing apparatus that issues an IC card, including: a data processor for issuing that generates issuing data to be used to issue the IC card in the IC card issuing apparatus by adding an identifier to an input data, and the identifier indicating processing to be executed in the IC card issuing apparatus.

Another embodiment of the invention provides an IC card issuing apparatus of an IC card issuing system, the system including a data processing apparatus for IC card issuing and the IC card issuing apparatus that issues an IC card, including: an issue processor that recognizes an identifier of issuing data and processes the issuing data with preset issue processing of the IC card, in response to the recognized identifier, and the issuing data being generated by adding the identifier to input data in the data processing apparatus for the IC card issuing.

Further another embodiment of the invention provides an IC card issuing system including: a data processing apparatus for IC card issuing; and an IC card issuing apparatus that issues an IC card, wherein the data processing apparatus for the IC card issuing includes a data processor for issuing that generates issuing data to be used to issue the IC card in the IC card issuing apparatus by adding an identifier to an input data, and the identifier indicating processing to be executed in the IC card issuing apparatus, and the IC card issuing apparatus includes an issue processor that recognizes an identifier of issuing data and processes the issuing data with preset issue processing of the IC card, in response to the recognized identifier, and the issuing data being generated by adding the identifier to input data in the data processing apparatus for the IC card issuing.

Still further embodiment of the invention provides a data processing program for IC card issuing to be used in a computer for controlling a data processing apparatus for IC card issuing of an IC card issuing system, the system including the data processing apparatus for the IC card issuing and an IC card issuing apparatus that issues an IC card, wherein the computer functions as a data processor for issuing that generates issuing data to be used to issue the IC card in the IC card issuing apparatus by adding an identifier to an input data, and the identifier indicating processing to be executed in the IC card issuing apparatus.

Still further embodiment of the invention provides an IC card issuing program to be used in a computer for controlling an IC card issuing apparatus of an IC card issuing system, the system including a data processing apparatus for IC card issuing and the IC card issuing apparatus that issues an IC card, wherein the computer functions as an issue processor that recognizes an identifier of issuing data and processes the issuing data with preset issue processing of the IC card, in response to the recognized identifier, and the issuing data being generated by adding the identifier to input data in the data processing apparatus for the IC card issuing.

In the embodiments of the invention, for example, the data processor for issuing of the data processing apparatus for the IC card issuing may add a preset identifier to the input data in response to an input order of the input data.

In the embodiments of the invention, for example, the data processing apparatus for the IC card issuing may be a terminal apparatus. In addition, the data processor for issuing of the data processing apparatus for IC card issuing may have a CPU and a memory.

A data processing apparatus for IC card issuing, an IC card issuing apparatus, an IC card issuing system, a data processing program for IC card issuing, and an IC card issuing program according to an embodiment will be described below in detail with reference to the accompanying drawings.

According to an embodiment, a portable electronic apparatus (IC card) 500 and an issuing apparatus (IC card issuing apparatus) 400, which issues the IC card 500, have, for example, functions of contact communication and/or non-contact communication. Thus, the IC card 500 and the issuing apparatus 400 can transmit/receive data to/from each other.

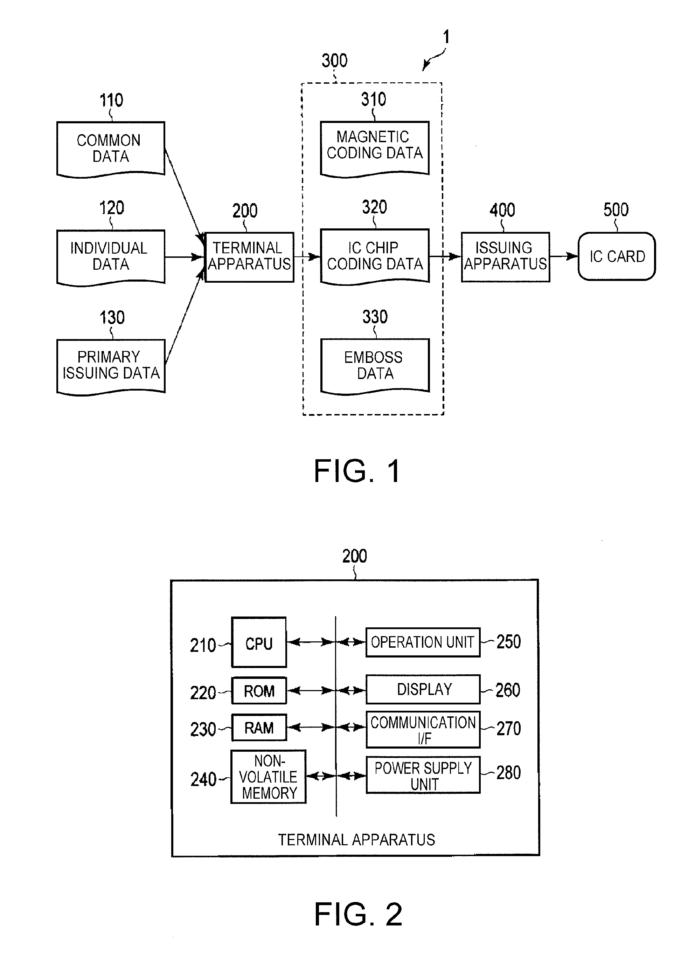

Fig. 1 illustrates a configuration example of an IC card issuing system 1 according to an embodiment.
The IC card issuing system 1 includes a terminal apparatus (data processing apparatus for IC card issuing) 200 which generates issuing data for issuing the IC card 500 and the issuing apparatus 400 for issuing the IC card 500.

The terminal apparatus 200 executes the data processing program for the IC card issuing, thereby generating issuing data 300 based on input data, that is, common data 110, individual data 120, and primary issuing data 130.

The common data 110 is data according to specifications of IC cards. For example, the common data 110 is information on an application to be used during operation of the IC card 500 and an issuer of the IC card 500.

The individual data 120 is data which is different for each IC card 500. For example, the individual data 120 is individual information or information, such as a unique PIN code of card, on an owner of the IC card 500.

The primary issuing data 130 is data for initializing and primarily issuing a memory of the IC card 500. For example, the primary issuing data 130 has information required for creating a file in the IC card 500. That is, the primary issuing data 130 has memory mapping to create the file in a nonvolatile memory of the IC card 500. In addition, the primary issuing data 130 may be configured to include an application body which is executed by the IC card 500.

As illustrated in Fig. 2, the terminal apparatus 200 includes a CPU 210, a ROM 220, a RAM 230, a nonvolatile memory 240, an operation unit 250, a display 260, a communication I/F 270, and a power supply unit 280. The CPU 210, the ROM 220, the RAM 230, the nonvolatile memory 240, the operation unit 250, the display 260, and the communication I/F 270 are connected to each other through a bus.

The CPU 210 functions as a controller which controls the entire terminal apparatus 200. The CPU 210 executes various kinds of processing based on a control program and control data stored in the ROM 220 or the nonvolatile memory 240. For example, the CPU 210 executes the data processing program for the IC card issuing stored in the ROM 220 or the nonvolatile memory 240 and thus functions as the data processing apparatus for the IC card issuing for generating the issuing data.

The ROM 220 is a nonvolatile memory which previously stores a program for control, control data, or the like. The RAM 230 is a volatile memory functioning as a working memory. The RAM 230 temporarily stores data or the like, which is being processed by the CPU 210. For example, the RAM 230 temporarily stores data which is transmitted and received to/from an external apparatus through the communication I/F 270. In addition, the RAM 230 temporarily stores a program which is executed by the CPU 210.

The nonvolatile memory 240 includes, for example, an EEPROM. The nonvolatile memory 240 stores, for example, a program for control, control data, an application, and data for use in the application.

The operation unit 250 includes, for example, operation keys, and generates an operation signal based on an operation which is input by an operator. The operation unit 250 inputs the generated operation signal to the CPU 210.
Thus, the CPU 210 can execute processing based on the operation which has been input by the operator.

The display 260 displays various kinds of information based on a signal for displaying video which is input from the CPU 210 or a display processing module such as a graphic controller (not illustrated).

The communication I/F 270 is an interface device which communicates with other devices inside the IC card issuing system 1. For example, the CPU 210 of the terminal apparatus 200 can receive the common data 110, the individual data 120, and the primary issuing data 130 through the communication I/F 270. In addition, for example, the CPU 210 of the terminal apparatus 200 can supply the issuing data 300 to the issuing apparatus 400 through the communication I/F 270.

The power supply unit 280 supplies power to the respective parts of the terminal apparatus 200. For example, the power supply unit 280 receives power from a commercial power supply, converts the power to a predetermined voltage, and supplies the voltage to the respective parts of the terminal apparatus 200.

As described above, the terminal apparatus 200 executes the data processing program for the IC card issuing to generate the issuing data 300 based on the common data 110, the individual data 120, and the primary issuing data 130. The issuing data 300 includes, for example, magnetic coding data 310, IC chip coding data 320, and emboss data 330.

The magnetic coding data 310, in other words, magnetic stripe data, is data for recording information on a magnetic layer of the IC card 500. The IC chip coding data 320 is data for recording information into an IC chip of the IC card 500. The emboss data 330 is data for performing emboss processing on the substrate of the IC card 500.

The issuing apparatus 400 issues the IC card 500 based on the issuing data 300. The issuing apparatus is sometimes called as a personalization machine.

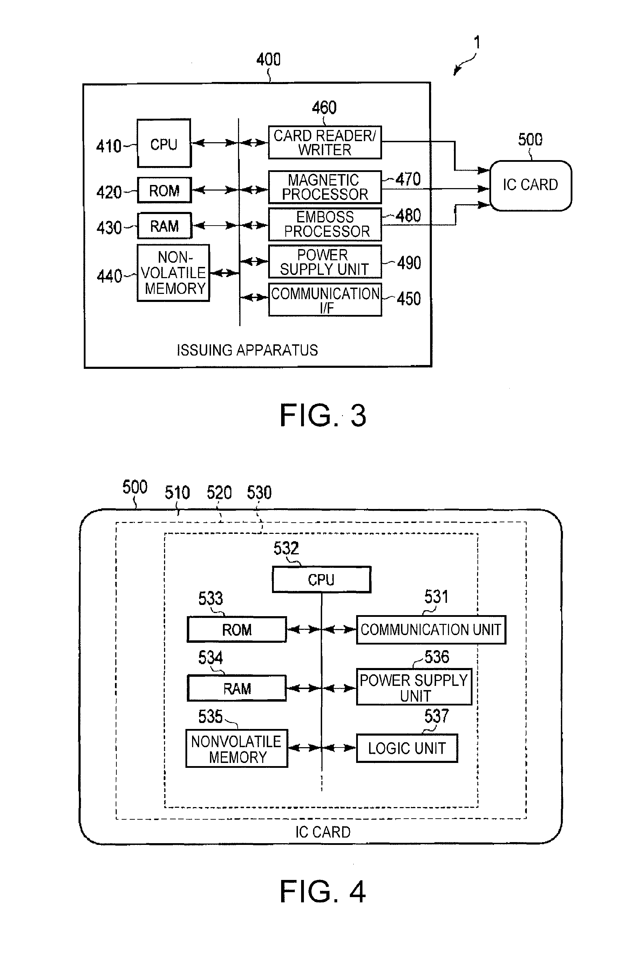

As illustrated in Fig. 3, the issuing apparatus 400 includes a CPU 410, a ROM 420, a RAM 430, a nonvolatile memory 440, a communication I/F 450, a card reader/writer 460, a magnetic processor (magnetic processing unit) 470, an emboss processor (emboss processing unit) 480, and a power supply unit 490. The CPU 410, the ROM 420, the RAM 430, the nonvolatile memory 440, the communication I/F 450, the card reader/writer 460, the magnetic processor 470, and the emboss processing unit 480 are connected to each other through a bus.

The CPU 410 functions as a controller which controls the entire issuing apparatus 400. The CPU 410 executes various kinds of processing based on a control program and control data stored in the ROM 420 or the nonvolatile memory 440. For example, the CPU 410 executes the IC card issuing program stored in the ROM 420 or the nonvolatile memory 440 and thus functions as the IC card issuing apparatus for issuing the IC card.

The ROM 420 is a nonvolatile memory which previously stores a program for control, control data, or the like. The RAM 430 is a volatile memory functioning as a working memory. The RAM 430 temporarily stores data or the like, which is being processed by the CPU 410. For example, the RAM 430 temporarily stores data which is transmitted and received to/from an external apparatus through the communication I/F 450. In addition, the RAM 430 temporarily stores a program which is executed by the CPU 410.

The nonvolatile memory 440 includes, for example, an EEPROM. The nonvolatile memory 440 stores, for example, a program for control, control data, an application, and data for use in the application.

The communication I/F 450 is an interface device which communicates with other devices inside the IC card issuing system 1. For example, the CPU 410 of the issuing apparatus 400 can receive the issuing data 300 from the terminal apparatus 200 through the communication I/F 450.

The card reader/writer 460 is a module for writing information to the IC chip of the IC card 500. The CPU 410 of the issuing apparatus 400 allows the card reader/writer 460 to execute various kinds of processing on the IC card 500 based on the IC chip coding data 320 of the issuing data 300. Thus, the issuing apparatus 400 can issue the IC card 500.

The card reader/writer 460 is an interface device for communicating with the IC card 500. The card reader/writer 460 transmits and receives data to/from the IC card 500 by contact communication or non-contact communication.

When being used as an interface for contact communication, the card reader/writer 460 includes a slot into which the IC card 500 is inserted, and a plurality of contact terminals which are connected to a contact pattern provided on the IC card 500.

When the IC card 500 is inserted into the slot, the plurality of contact terminals of the card reader/writer 460 are connected to the contact pattern of the IC card 500. Thus, the issuing apparatus 400 and IC card 500 are electrically connected to each other. The card reader/writer 460 supplies the power to the IC card 500 which is inserted into the slot, supplies a clock to the IC card, inputs a reset signal to the IC card, and transmits and receives data to/from the IC card.

In addition, when being used as an interface of non-contact communication, the card reader/writer 460 includes a signal processor, which performs signal processing on the data which is transmitted and received, and an antenna having a predetermined resonance frequency.

In the case of the non-contact communication, the card reader/writer 460 performs, for example, by the signal processor, signal processing such as encoding, decoding, modulation, and demodulation on the data which is transmitted and received. In addition, the card reader/writer 460 supplies the encoded and modulated data to the antenna. The antenna generates a magnetic field in response to the supplied data. Thus, the issuing apparatus 400 can transmit the data to the IC card 500, which is present within the communicable range, in a non-contact manner.

Further, the antenna of the card reader/writer 460 detects the magnetic field and generates a signal in response to the detected magnetic field. Thus, the card reader/writer 460 can receive the signal in a non-contact manner. The signal processor demodulates and decodes the signal received by the antenna. Thus, the issuing apparatus 400 can acquire original data which has been transmitted from the IC card 500.

The magnetic processor 470, namely, a magnetic processing unit, is a module for writing information to the magnetic layer of the IC card 500. The CPU 410 of the issuing apparatus 400 allows the magnetic processor 470 to write various kinds of information to the magnetic layer of the IC card 500 based on the magnetic coding data 310 of the issuing data 300.

The emboss processor 480, namely, an emboss processing unit, is a module for performing the emboss processing on the substrate of the IC card 500. The CPU 410 of the issuing apparatus 400 allows the emboss processor 480 to perform the emboss processing on the substrate of the IC card 500 based on the emboss data 330 of the issuing data 300.

The power supply unit 490 supplies power to the respective parts of the issuing apparatus 400. For example, the power supply unit 490 receives power from a commercial power supply, converts the power to a predetermined voltage, and supplies the voltage to the respective parts of the issuing apparatus 400.

Fig. 4 illustrates a configuration example of the IC card 500 according to the embodiment.
As illustrated in Fig. 4, the IC card 500 includes, for example, a rectangular main body 510 and an IC module 520 which is incorporated in the main body 510. The IC module 520 includes an IC chip 530 and a communication unit 531. The IC chip 530 and the communication unit 531 are formed in the IC module 520 in a state of being connected to each other.

In the meantime, the main body 510 may have any shape without being limited to the rectangular shape, if the main body has such a shape that at least the IC module 520, in which the communication unit 531 is provided, can be disposed.

The IC chip 530 includes, for example, the communication unit 531, a CPU 532, a ROM 533, a RAM 534, a nonvolatile memory 535, a power supply unit 536, and a logic unit 537. The communication unit 531, the CPU 532, the ROM 533, the RAM 534, the nonvolatile memory 535, the power supply unit 536, and the logic unit 537 are connected to each other through a bus.

The communication unit 531 is an interface for communicating with the card reader/writer 460 of the issuing apparatus 400 or a card reader/writer of another terminal apparatus (external apparatus). For example, the communication unit 531 is a Universal Asynchronous Receiver Transmitter (UART).

When being used as an interface for contact communication, the communication unit 531 includes a contact pattern which is connected to contact terminals of the card reader/writer 460. The contact pattern is a contact terminal which is formed on the surface of the IC module 520 by, for example, a metal with electrical conductivity. That is, the contact pattern is formed to be contactable with the card reader/writer 460 of the issuing apparatus 400.

The contact pattern is formed such that a surface formed of the metal is divided into a plurality of areas. The divided areas function as terminals, respectively. The communication unit 531 can transmit and receive data to/from the card reader/writer 460 through the contact pattern.

In addition, when being used as an interface of non-contact communication, the communication unit 531 includes a signal processor and an antenna.

The signal processor performs signal processing, such as encoding and load modulation, on the data which is transmitted to the issuing apparatus 400 and another terminal apparatus. For example, the signal processor modulates (amplifies) the data which is transmitted to the issuing apparatus 400 and other terminal apparatuses. The signal processor supplies the data, which has been subjected to the signal processing, to the antenna.

For example, the antenna is configured of a metallic wire which is provided in a predetermined shape in the IC module 520. The IC card 500 generates a magnetic field in response to the data, which is transmitted to the issuing apparatus 400 and other terminal apparatuses, by the antenna. Thus, the IC card 500 can transmit data to the issuing apparatus 400 and other terminal apparatuses. In addition, the IC card 500 recognizes the data which is transmitted from the issuing apparatus 400 and other terminal apparatuses based on an induction current occurring in the antenna by electromagnetic induction.

For example, the signal processor performs demodulation and decoding on the induction current occurring in the antenna.
For example, the signal processor analyzes a signal which is received by the antenna. Thus, the communication unit 531 obtains two-value logic data. The communication unit 531 transmits the analyzed data to the CPU 532 through the bus.

The CPU 532 functions as a controller which controls the entire of the IC card 500. The CPU 532 performs various kinds of processing based on a control program and control data stored in the ROM 533 or the nonvolatile memory 535. For example, the CPU performs various kinds of processing in accordance with commands which are received from the issuing apparatus 400 and other terminal apparatuses, and generates data, such as a response, as a processing result.

The ROM 533 is a nonvolatile memory which prestores a program for control and control data. The ROM 533 is incorporated in the IC card 500 in a state in which the control program and control data were stored therein at a manufacture stage. That is, the control program and control data, which are stored in the ROM 533, are incorporated in advance according to the specifications of the IC card 500.

The RAM 534 is a volatile memory functioning as a working memory. The RAM 534 temporarily stores data, or the like, which is being processed by the CPU 532. For example, the RAM 534 temporarily stores data which has been received from the issuing apparatus 400 and other terminal apparatuses through the communication unit 531. In addition, the RAM 534 temporarily stores data which is to be transmitted to the issuing apparatus 400 and other terminal apparatuses through the communication unit 531. Furthermore, the RAM 534 temporarily stores a program which is executed by the CPU 532.

The nonvolatile memory 535 includes, for example, a data writable and rewritable nonvolatile memory such as an EEPROM. The nonvolatile memory 535 stores a control program and various data according to purposes of operational use of the IC card 500.

For example, a program file and a data file are created in the nonvolatile memory 535. For example, a control program and various data are written in each of the files which have been created. The CPU 532 can realize various kinds of processing by executing the program stored in the nonvolatile memory 535 or the ROM 533.

The power supply unit 536 supplies power to the respective parts of the IC card 500. When the IC card 500 includes a structure for contact communication, the power supply unit 536 supplies power, which is supplied from the card reader/writer 460 of the issuing apparatus 400 through the contact pattern of the communication unit 531, to the respective parts of the IC card 500.

In addition, when the IC card 500 includes a structure for non-contact communication, power is generated based on an electric wave, in particular, a carrier wave, which is transmitted from the antenna of the card reader/writer 460 of the issuing apparatus 400. Further, the power supply unit 536 generates an operation clock. The power supply unit 536 supplies the generated power and the operation clock to the respective parts of the IC card 500. The respective parts of the IC card 500 are in an operable state when being supplied with power.

The logic unit 537 is an arithmetic unit which performs arithmetic processing by hardware. For example, based on a command from the issuing apparatus 400 and other terminal apparatuses, the logic unit 537 performs processes such as encryption, decryption, hash calculation, and generation of a random number. For example, in the case of receiving a mutual authentication command from the issuing apparatus 400 and other terminal apparatuses, the logic unit 537 executes the arithmetic processing related to a mutual authentication processing.

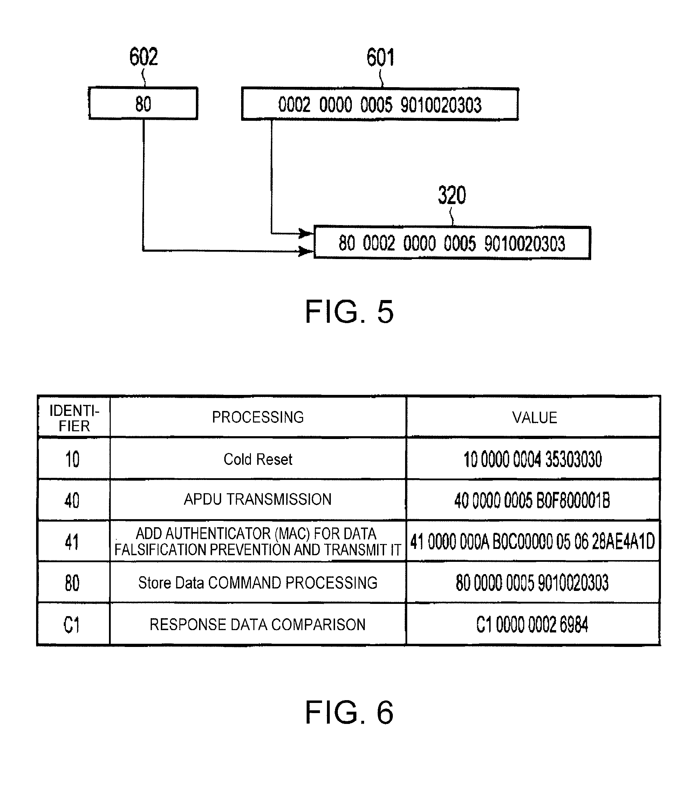

Fig. 5 illustrates an operation example of the terminal apparatus 200 functioning as the data processing apparatus for the IC card issuing.

The CPU 210 executes the data processing program for the IC card issuing stored in the ROM 220 or the nonvolatile memory 240, and thus the terminal apparatus 200 converts the input data into the issuing data 300 available in the issuing apparatus 400. The CPU 210 and memories, such as the ROM 220 and the nonvolatile memory 240 constitute a data processor for issuing.

Each of the common data 110, the individual data 120, and the primary issuing data 130 is configured by one or more data.

The CPU 210 of the terminal apparatus 200 reads each data of the common data 110, the individual data 120, and the primary issuing data 130 one by one and generates the magnetic coding data 310, the IC chip coding data 320, and the emboss data 330 based on a preset sequence.

For example, each of the common data 110, the individual data 120, and the primary issuing data 130 is input to the CPU 210 of the terminal apparatus 200 in the preset order. Here, each of the common data 110, the individual data 120, and the primary issuing data 130 is referred to as input data 601. That is, the input data 601 is one of the common data 110, the individual data 120, and the primary issuing data 130.

The input data 601 includes data such as an "option data length", "option data", a "data length of data portion", and a "data portion".

The "option data length" indicates a length of the "option data". The "option data" is used to indicate subordinate matters related to the processing of the input data 601. For example, it is assumed that the terminal apparatus 200 and the issuing apparatus 400 include a plurality of decryption keys and a plurality of encryption keys. In this case, the "option data" indicates a key for decrypting or encrypting the "data portion" of the input data 601. For example, the "option data" indicates the key number for decrypting the "data portion of the input data 601. In addition, the "option data" indicates the key number for encrypting the "data portion of the input data 601.

The "data length of the data portion" indicates a length of the "data portion". The "data portion" is a main body of data to be processed by the issuing apparatus 400.

The CPU 210 performs the preset processing on the input data 601 and converts the input data 601 into the magnetic coding data 310, the IC chip coding data 320, and the emboss data 330.

For example, the CPU 210 converts the input data 601, which is input in the preset order, into the magnetic coding data 310. In addition, the CPU 210 converts the input data 601, which is input in the preset order, into the emboss data 330. Furthermore, the CPU 210 generates the IC chip coding data 320 by adding an identifier 602 to the input data 601 which is input in the preset order.

The data processing program for the IC card issuing includes various identifiers 602. That is, various identifiers 602 are held in the ROM 220 or the nonvolatile memory 240. For example, the CPU 210 recognizes a kind of the input data 601 according to the input order of the input data 601. The CPU 210 determines the identifier 602 to be added to the input data 601 according to the kind of the input data 601. That is, the CPU 210 adds the identifier 602 according to the input order of the input data 601 to each of the input data 601.

The identifier 602 is data indicating a kind of processing to be executed by the issuing apparatus 400. For example, the identifier 602 is fixed-length data. For example, the CPU 210 adds the identifier 602 according to the input order of the input data 601 to the input data 601, thereby generating the IC chip coding data 320.

As illustrated in Fig. 5, the IC chip coding data 320 has the data such as the "identifier", the "option data length", the "option data", the "data length of the data portion", and the "data portion".

In addition, the IC card issuing program held by the issuing apparatus 400 includes a table configured by associating the kind of the processing to be executed with the identifier. That is, the table configured by associating the kind of the processing to be executed with the identifier is held in the ROM 420 or the nonvolatile memory 440. The CPU 410 and memories, such as the ROM 420 and the nonvolatile memory 440 constitute an issue processor.

The CPU 410 of the issuing apparatus 400 extracts each of the "identifier", the "option data length", the "option data", the "data length of the data portion", and the "data portion" when the IC chip coding data 320 is input. The CPU 410 specifies processing associated with the identifier extracted from the IC chip coding data 320, with reference to the table. The CPU 410 executes the processing specified from the identifier, using the data of the "data portion" extracted from the IC chip coding data 320. That is, the CPU 410 executes the processing associated with the "identifier", using the data of the "data portion" of the IC chip coding data 320.

Fig. 6 illustrates an example of the IC chip coding data 320 which is the issuing data 300.

For example, when a value of the IC chip coding data 320 is "10 0000 0004 35303030", the CPU 410 recognizes that: the identifier is "10"; the option data length is "0000"; the data length of the data portion is "0004"; and the data portion is "35303030". When the identifier is "10", the CPU 410 executes "Cold Reset processing in which Cold Reset is 5.0 V ("35303030")".

In addition, for example, when the value of the IC chip coding data 320 is "40 0000 0005 B0F800001B", the CPU 410 recognizes that: the identifier is "40"; the option data length is "0000"; the data length of the data portion is "0005; and the data portion is "B0F800001B". When the identifier is "40", the CPU 410 executes "APDU transmission processing of transmitting the data portion of "B0F800001B" without any changing".

In addition, for example, when the value of the IC chip coding data 320 is "41 0000 000A B0C0000005 06 28AE4A1D", the CPU 410 recognizes that: the identifier is "41"; the option data length is "0000"; the data length of the data portion is "000A; and the data portion is "B0C00000 0506 28AE4A1D". When the identifier is "41, the CPU 410 executes the processing of adding authenticator (MAC) for data falsification prevention and transmitting it. In the example of Fig. 6, the CPU 410 executes the "processing of adding a MAC "28AE4A1D" generated by a key of a version "06" to " APDU header "B0C00000" and MAC key version "06" and transmitting it".

In addition, for example, when the value of the IC chip coding data 320 is "80 0000 0005 9010020303, the CPU 410 recognizes that: the identifier is "80"; the option data length is "0000"; the data length of the data portion is "0005"; and the data portion is "9010020303". When the identifier is "80", the CPU 410 executes "Store Data command processing of adding an APDU header "80E200xx" of Store Data to the data portion "9010020303" and transmitting it".

In addition, for example, when the value of the IC chip coding data 320 is "C1 0000 0002 6984", the CPU 410 recognizes that: the identifier is "C1"; the option data length is "0000"; the data length of the data portion is "0002"; and the data portion is "6984". When the identifier is "C1", the CPU 410 executes "response data comparison processing of comparing an immediately preceding response to an expected value "6984".

As described above, the CPU 210 of the terminal apparatus 200 can generate the IC chip coding data 320, which allows the issuing apparatus 400 to execute primary issuance and secondary issuance of the IC card 500, in response to the input data. In addition, the CPU 410 of the issuing apparatus 400 executes various kinds of processing in response to the identifier of the IC chip coding data 320. Thus, it is possible to execute primary issuance and secondary issuance of the IC card 500.

Specifically, the issuing apparatus 400 transmits a command (initialization command) to the IC card 500 based on the IC chip coding data 320 in the primary issuance, thereby initializing the nonvolatile memory 535 of the IC chip 530 of the IC card 500. Thus, the issuing apparatus 400 defines a key file, a data file, or the like according to the intended use and the purpose of use of the IC card 500, in the nonvolatile memory 535 of the

IC card 500.

In addition, the issuing apparatus 400 creates a file structure defined by ISO/IEC 7816 in the nonvolatile memory 535 based on, for example, the IC chip coding data 320. The initialized nonvolatile memory 535 includes, for example, a Master File (MF), a Dedicated File (DF), and an Elementary File (EF).

The MF is a file which becomes the root of a file structure. The DF is created at a level under the MF. The DF is a file which groups applications, data to be used in the applications, and the like and stores them. The EF is created at a level under the DF. The EF is a file for storing various data. In addition, there may be a case in which the EF is placed immediately under the MF.

The kinds of the EF include, for example, a Working Elementary File (WEF) and an Internal Elementary File (IEF). The WEF is an EF for working and stores individual information or the like. The IEF is an internal EF and stores data such as an encryption key for security.

Moreover, the issuing apparatus 400 executes the secondary issuance based on the IC chip coding data 320. In the secondary issuance, the issuing apparatus 400 stores individual data such as customer data in the EF based on the IC chip coding data 320. Thus, the IC card 500 is set in an operable state.

In the IC card issuing system 1 according to the embodiment, as described above, the terminal apparatus 200 converts the input data into the issuing data and the issuing apparatus 400 issues the IC card 500 based on the issuing data.

The IC card issuing program of the issuing apparatus 400 is configured to execute the processing in response to the identifier added to the issuing data. In addition, the data processing program for the IC card issuing of the terminal apparatus 200 is configured to add the identifier to the input data.

According to these configurations, it is possible to cope with the change in the specification of the IC card 500 to be issued by changing the input data to the data processing program for the IC card issuing of the terminal apparatus 200 without changing the IC card issuing program of the issuing apparatus 400. As a result, it is possible to more versatile data processing apparatus for the IC card issuing, IC card issuing apparatus, IC card issuing system, data processing program for the IC card issuing, and IC card issuing program.

According to the above embodiment, the data processing program for the IC card issuing of the CPU 210 in the terminal apparatus 200 is configured to add the identifier to the input data in response to the input order of the input data, but is not limited to such a configuration. For example, when the input data is added with a tag or the like which indicates the kind of the input data, the data processing program for the IC card issuing of the CPU 210 in the terminal apparatus 200 may be configured to add the identifier corresponding to the tag to the input data. In this case, the IC card issuing system 1 can cope with the change in the specification of the IC card 500 to be issued by changing the data 110, the individual data 120, and the primary issuing data 130 without changing the data processing program for the IC card issuing of the CPU 210 in the terminal apparatus 200.

In addition, for example, when the input data is stored in a preset format, the data processing program for the IC card issuing of the CPU 210 in the terminal apparatus 200 may be configured to add the identifier corresponding to the position of the data stored in the format to the input data.

Functions described in the above embodiment may be configured not only with use of hardware but also with use of software, for example, by making a computer read a program which describes the functions. Alternatively, each of the functions may be configured by appropriately selecting either software or hardware.

In the following description, reference numerals in the drawings will be exemplified.
1...the IC card issuing system, 110...common data, 120...individual data, 130...primary issuing data, 200...terminal apparatus (the data processing apparatus for IC card issuing), 210...CPU, 220...ROM, 230...RAM, 240...nonvolatile memory, 250...operation unit, 260...display, 270...communication I/F, 280...power supply unit, 300...issuing data, 310...magnetic coding data, 320...IC chip coding data, 330...emboss data, 400...issuing apparatus (the IC card issuing apparatus), 410...CPU, 420...ROM, 430...RAM, 440...nonvolatile memory, 450...communication I/F, 460...card reader/writer, 470...magnetic processor, 480...emboss processor (emboss processing unit), 490...power supply unit, 500...IC card, 510...main body, 520...IC module, 530...IC chip, 531...communication unit, 532...CPU, 533...ROM, 534...RAM, 535...nonvolatile memory, 536...power supply unit, 537...logic unit, 601...input data, 602...identifier.

While certain embodiments have been described, these embodiments have been presented by way of example only, and are not intended to limit the scope of the inventions. Indeed, the novel embodiments described herein may be embodied in a variety of other forms; furthermore, various omissions substitutions and changes in the form of the embodiments described herein may be made without departing from the spirit of the inventions. The accompanying claims and their equivalents are intended to cover such forms or modifications as would fall within the scope and spirit of the inventions.

## Claims

1. A data processing apparatus for IC card issuing of an IC card issuing system, the system including the data processing apparatus for the IC card issuing and an IC card issuing apparatus that issues an IC card, comprising:
a data processor for issuing that generates issuing data to be used to issue the IC card in the IC card issuing apparatus by adding an identifier to an input data, and the identifier indicating processing to be executed in the IC card issuing apparatus.

2. The data processing apparatus for the IC card issuing according to claim 1, wherein the data processor for issuing adds a preset identifier to the input data in response to an input order of the input data.

3. The data processing apparatus for the IC card issuing according to claim 1 or 2, wherein the data processing apparatus for the IC card issuing is a terminal apparatus.

4. The data processing apparatus for the IC card issuing according to any one of claims 1 to 3, wherein the data processor for issuing has a CPU and a memory.

5. An IC card issuing apparatus of an IC card issuing system, the system including a data processing apparatus for IC card issuing and the IC card issuing apparatus that issues an IC card, comprising:
an issue processor that recognizes an identifier of issuing data and processes the issuing data with preset issue processing of the IC card, in response to the recognized identifier, and the issuing data being generated by adding the identifier to input data in the data processing apparatus for the IC card issuing.

6. An IC card issuing system comprising:
a data processing apparatus for IC card issuing; and
an IC card issuing apparatus that issues an IC card,
wherein the data processing apparatus for the IC card issuing includes a data processor for issuing that generates issuing data to be used to issue the IC card in the IC card issuing apparatus by adding an identifier to an input data, and the identifier indicating processing to be executed in the IC card issuing apparatus, and
the IC card issuing apparatus includes an issue processor that recognizes an identifier of issuing data and processes the issuing data with preset issue processing of the IC card, in response to the recognized identifier, and the issuing data being generated by adding the identifier to input data in the data processing apparatus for the IC card issuing.

7. A data processing program for IC card issuing to be used in a computer for controlling a data processing apparatus for IC card issuing of an IC card issuing system, the system including the data processing apparatus for the IC card issuing and an IC card issuing apparatus that issues an IC card,
wherein the computer functions as a data processor for issuing that generates issuing data to be used to issue the IC card in the IC card issuing apparatus by adding an identifier to an input data, and the identifier indicating processing to be executed in the IC card issuing apparatus.

8. An IC card issuing program to be used in a computer for controlling an IC card issuing apparatus of an IC card issuing system, the system including a data processing apparatus for IC card issuing and the IC card issuing apparatus that issues an IC card,
wherein the computer functions as an issue processor that recognizes an identifier of issuing data and processes the issuing data with preset issue processing of the IC card, in response to the recognized identifier, and the issuing data being generated by adding the identifier to input data in the data processing apparatus for the IC card issuing.
